# EUROPÄISCHE PATENTSCHRIFT

(11) **EP 2 001 961 B1**
(45) Veröffentlichungstag und Bekanntmachung des Hinweises auf die Patenterteilung: **23.12.2009**
(21) Anmeldenummer: 07723948.1
(22) Anmeldetag: 03.04.2007
(51) Int. Cl.: C09D 5/00, C09K 3/16

(54) **BODENDICKBESCHICHTUNG MIT ANTISTATISCHEN EIGENSCHAFTEN**
THICK FLOOR COATING HAVING ANTISTATIC PROPERTIES
ENDUIT ÉPAIS POUR LE SOL À PROPRIÉTÉS ANTISTATIQUES

(30) Priorität: 04.04.2006 DE 102006015775
(43) Veröffentlichungstag der Anmeldung: 17.12.2008
(73) Patentinhaber: Construction Research & Technology GmbH, 83308 Trostberg (DE); Evonik Goldschmidt GmbH, 45127 Essen (DE)
(72) Erfinder: KRAUSCHE, Christian, CH-8455 Rüdlingen (CH); WONG, Wai Man, CH-8200 Schaffhausen (CH); SAND, Stefanie, 78183 Hüfingen (DE); HILLER, Michael, 78262 Gailingen (DE); CAVALEIRO, Pedro, 41747 Viersen (DE)
(74) Vertreter: Dey, Michael
(86) Internationale Anmeldenummer: PCT/EP2007/003007
(87) Internationale Veröffentlichungsnummer: WO 2007/115750

(56) Entgegenhaltungen:
- WO-A-2005/087822
- WO-A-2006/123810
- JP-A- 2004 190 028
- US-A- 4 828 621

## Beschreibung

Gegenstand der vorliegenden Erfindung ist eine Bodendickbeschichtung mit antistatischen Eigenschaften.

In der Regel sind Beschichtungsstoffe elektrische Isolatoren, auf denen sich bei der Herstellung, Verarbeitung und dem Gebrauch daraus hergestellter Gegenstände hohe Oberflächenladungen ansammeln können.

Diese statischen Aufladungen führen zu unerwünschten Effekten und ernsten Gefahrensituationen, welche von der Anziehung von Staub, der Anhaftung von hygienisch bedenklichen Verunreinigungen, der Zerstörung elektronischer Bauteile durch Funkenüberschläge, physiologisch unangenehmen elektrischen Schlägen, Entzündung brennbarer Flüssigkeiten in Behältern oder Rohren, in denen diese gerührt, gegossen, gefördert und gelagert werden, bis hin zu Staubexplosionen, beispielsweise beim Umfüllen von mit Stäuben gefüllten Großgebinden, reichen. Die unerwünschte elektrostatische Ansammlung von Staub an der Oberfläche von Beschichtungsstoffen kann unter Einwirkung mechanischer Belastungen zu einem schnelleren Zerkratzen und somit kürzerer Nutzungsdauer der Gebrauchsgegenstände führen.

Es besteht daher großes Interesse, statische Aufladungen dieser Beschichtungen zu verhindern oder auf ein ungefährliches Maß zu minimieren.

Eine allgemein angewandte Methode, das Ableiten von Ladungen zu ermöglichen und die statische Aufladung zu minimieren, ist der Einsatz von Antistatika, d. h. nichtionischen oder ionischen grenzflächenaktiven Verbindungen und insbesondere Ammonium- und Alkalimetallsalzen, wobei diese im Wesentlichen in Form von äußeren und inneren Antistatika eingesetzt werden.

Äußere Antistatika werden als wässrige oder alkoholische Lösungen durch Sprühen, Aufstreichen oder Tauchen und anschließender Lufttrocknung auf die Oberfläche der Beschichtungsstoffe aufgetragen. Der verbleibende antistatische Film ist auf fast allen Oberflächen wirksam, hat aber den Nachteil, dass er durch Reibung oder Flüssigkeit sehr leicht und ungewollt wieder entfernt wird.

Im Gegensatz zu den inneren Antistatika mit aus dem Inneren der ausgehärteten Beschichtungsstoffe nachmigrierenden Antistatikamoleküle weisen externe Antistatika aufgrund des fehlenden Depoteffektes keine Langzeitwirkung auf. Daher werden vorzugsweise innere Antistatika verwendet, welche den Beschichtungsstoffen soweit wie möglich in reiner Form oder in Form von konzentrierten Formulierungen zugesetzt werden. Nach der Aushärtung der Beschichtungsstoffe sind die inneren Antistatika homogen verteilt, so dass sie in der resultierenden ausgehärteten Schicht überall ihre Wirkung entfalten und nicht nur an der Grenzfläche zur Luft vorhanden sind.

Nach heutigen, durch Versuchen belegten Vorstellungen, migrieren die moleküle aufgrund ihrer bedingten Unverträglichkeit kontinuierlich an die Oberflächen der Beschichtungsstoffe und reichern sich dort an, bzw. ersetzen Verluste. Der hydrophobe Teil verbleibt dabei in den Beschichtungsstoffen, der hydrophile Teil bindet in der Atmosphäre befindliches Wasser und bildet eine leitende Schicht, welche Ladungen bereits bei einigen zehn oder hundert Volt und nicht erst bei gefährlichen einigen tausend Volt an die Atmosphäre ableiteten kann. Auf diese Weise wird gewährleistet, dass sich über einen längeren Zeitraum eine wirksame Menge Antistatika an der Oberfläche befindet.

Die Migrationsrate (Diffusionsgeschwindigkeit) ist jedoch bei diesem konzept ein kritischer Faktor:
Ist sie zu groß, können sich (z.B. kristalline) Strukturen niedriger Energie ausbilden, welche die Fähigkeit, Feuchtigkeit zu binden, verlieren und dadurch den Antistatikeffekt deutlich reduzieren und an der Oberfläche unerwünschte Schmierfilme erzeugen, mit allen damit verbundenen ästhetischen und verarbeitungstechnischen Nachteilen, wobei auch die Wirksamkeit gefährdet ist.

Ist die Migrationsrate zu gering, wird keine oder keine in praxisgerechten Zeiten ausreichende Wirkung erzielt.

Es werden daher bereits Kombinationen aus schnell und langsam migrierenden Antistatika eingesetzt, um bei einer ausreichend schnellen Anfangswirkung auch eine über Wochen und Monate anhaltende Langzeitwirkung zu erzielen.

Typische, ausgehärtete Beschichtungsstoffe haben Oberflächenwiderstände im Bereich von 10¹⁴ bis 10" Ohm und können daher Spannungen von bis zu 15.000 Volt aufbauen. Wirksame Antistatika sollten daher die Oberflächenwiderstände der Beschichtungsstoffe auf 10¹⁰ Ohm oder darunter abbauen können.

Daneben ist noch zu berücksichtigen, dass Antistatika die physikalischen und technischen Eigenschaften der ausgehärteten Beschichtungsstoffe, wie beispielsweise Oberflächenverlauf, Substratbenetzbarkeit, Substrathaftung, Siegelfähigkeit und thermische Stabilität, beeinflussen können. Zur Minimierung dieser Effekte sollten sie daher bereits in geringen Konzentrationen wirksam werden. Typische Einsatzmengen von heute genutzten Antistatika liegen bei 0,01-3 Gew.-% bezogen auf die Gesamtmenge des Beschichtungsstoffs.

Metallsalze sind bekannte und wirksame Antistatika. Sie haben jedoch den Nachteil, dass sie zur homogenen Verteilung in Beschichtungsstoffen vor der Anwendung gelöst werden müssen. Übliche Lösemittel sind Alkohole, Ether, Ester, Polyether, cyclische Ether, cyclische Ester, Amide, cyclische Amide, aromatische Verbindungen oder ganz allgemein organische Lösemittel.

Die Löslichkeit ist jedoch zum Teil sehr gering, so dass für ausreichend wirksame Einsatzkonzentrationen große Mengen an Lösemittel verwendet werden müssen.

Sofern diese Antistatikaformulierungen in transparenten Beschichtungsstoffen eingesetzt werden, haben sie den Nachteil, dass sie die optischen Eigenschaften des Endproduktes nachteilig beeinflussen können.

In reaktiven Mehrkomponentensystemen, wie beispielsweise bei der Herstellung von reaktiven Polyurethanbeschichtungen, können gegebenenfalls vorhandene reaktive Gruppen des Lösemittels bzw. anderer Bestandteile der Antistatikaformulierungen unerwünscht an der Reaktion teilnehmen und so insbesondere die physikalischen Eigenschaften des Endproduktes verändern. In der Praxis werden daher die Metallsalze vorzugsweise in einem der Formulierungsbestandteile gelöst, bei Polyurethanen ist dies in der Regel die Alkoholkomponente, d.h. in Di- oder Polyolen, die dann mit Isocyanatkomponenten zur Polymermatrix umgesetzt werden. Aufgrund der Vielzahl der einsetzbaren Polyole müßte dann eine entsprechende Vielzahl von Lösungen bereitgestellt werden. Daher werden diese Anitstatika/Metallsalze häufig in Lösemitteln gelöst, die Bestandteil sämtlicher Formulierungen sind, wie z.B. Ethylenglykol, Propylenglykol oder aber andere reaktive organische Lösemittel. Nachteilig ist hierbei, dass üblicherweise der Anteil dieser Formulierungsbestandteile, die dann nicht nur als Reaktivkomponente In der Polyurethanformulierung, sondern entweder zusätzlich oder auch ausschließlich als Lösemittel in derAntistatikformulierung verwendet werden, in der Polyurethanformulierung insgesamt nicht höher sein darf, als es ohne den Zusatz der Antistatikformulierung der Fall wäre, um die physikalischen Eigenschaften des Endproduktes möglichst nicht zu verändern.

Es wurde bereits versucht, Lösemittel für Metallsalze bereitzustellen, welche universell einsetzbar sind und ein hohes Lösungsvermögen für eine Vielzahl von Metallsalzen besitzen. Außerdem sollten sie gegenüber den Reaktionskomponenten weitgehend inert sein oder aber auch Bestandteil der Formulierung sein bzw. keinen negativen Einfluss auf die physikalischen Eigenschaften des Endproduktes haben. Das neue Lösemittel sollte zusätzlich verbesserte Lösemittelcharakteristik für Metallsalze aufweisen, wobei die resultierende Lösung aus Lösemittel und Metallsalz bessere Antistatikeigenschaften in Beschichtungsstoffen aufweisen soll.

Zu diesem Zweck werden bestimmte ionische Flüssigkeiten verwendet, die bessere Lösemittel für viele Metallsalze darstellen als die oben angeführten Di- und Polyole und gängige organische Lösemittel. Zur Herstellung wirksamer Anstistatikaformulierungen sollen deutlich geringere Mengen an Lösemittel erforderlich sein, um einen effektiven Gehalt an Metallsalz zur Verbesserung der Leitfähigkeit in Beschichtungsstoffen einzubringen (WO 2008/006422). In diesem Dokument wird zwar die Verwendung ionischer Flüssigkeiten als Lösemittel für Metallsalze vorbeschrieben, wobei derartigen Mischungen zusätzlich organische Lösemittel oder Dispergiermittel zugesetzt werden können, um einen möglichst hohen Leitsalzgehalt einzustellen. Vorbeschrieben ist auch, dass diese Systeme in Beschichtungsstoffen, Druckfarben und/oder Drucklacken zum Einsatz kommen. Die in diesem Zusammenhang genannten Beschichtungsstoffe stellen allerdings ausschließlich niedrigviskose Systeme dar, die in dünner Schicht meist in Form einer Farbe oder eines Lacks appliziert werden. Weder in der Beschreibung noch in den Beispielen werden Hinweise darauf gegeben,dass derartige Antistatika-Systeme auch in Dickbeschichtungen eingesetzt werden, die einen grundsätzlich anderen Aufbau aufweisen und auch in anderen Anwendungsbereichen mit abweichenden Anforderungen Verwendung finden.

Ableitfähige Böden müssen in der Lage sein, statische Aufladungen gezielt abzuleiten, weshalb in der Regel spezielle Systemaufbauten verwendet werden, deren Hauptbestandteile neben einer Grundierung ein hochleitfähiger Leitlack und eine durchleitfähige Deckbeschichtung sind. Die erforderliche Durchleitfähigkeit wird im Wesentlichen durch die Verwendung von Kohlenstofffasern realisiert. Schließlich muss der Leitlack noch mit der Erdung verbunden sein.

Die so genannten ESD-Böden sind dafür konzipiert, statische Aufladungen möglichst zu vermeiden und definiert abzuleiten. Die Überprüfbarkeit dieser Funktionen erfolgt neben den herkömmlichen Elektrodenmessungen zusätzlich durch die Messung der Personenaufladung (Body Voltage Generation), der Personenableitfähigkeit mittels einer Systemmessung Mensch/Schuh/Boden/Erde sowie über den zeitlich limitierten Entladevorgang der Person (decay time). Relevante Normen hierfür sind z.B: CEI IEC 61340-5-1, IEC 61340-4-1 sowie IEC 61340-4-5. Derartige ESD-Böden sind wie die ableitfähigen Systeme aufgebaut, zusätzlich aber mit mindestens einer dünnschichtigen Oberflächen-leitfähigen Versiegelung versehen. Möglich ist auch die zusätzliche Verwendung Oberflächenleitfähiger Deckbeschichtungen, wobei die Oberflächenleitfähigkeit in diesem Fall durch die Verwendung leitfähiger Füllstoffe und Pigmente eingestellt wird. Derartige Systeme sind allerdings sehr teuer. Außerdem ist die Schichtdickentoleranz dieser Beschichtungen in der Regel sehr beschränkt und die darin auch verwendeten quartären Ammoniumverbindungen nicht ausreichend wirksam.

Sowohl für die ableitfähigen Böden als auch für die ESD-Böden werden als Polymermatrix unterschiedliche Bindemittelsysteme eingesetzt. Am häufigsten sind Amin-gehärtete Epoxidharze, aromatische und aliphatische Polyurethansysteme, radikalisch vernetzende Methacrylate (PMMA-Böden) sowie Vinylester. Um die gewünschten ESD-Eigenschaften zu erzielen, ist ein hoher Applikationsaufwand zu betreiben, wobei im Allgemeinen teure Deckschichten aufgebracht werden müssen.

Aus den geschilderten Nachteilen des Standes der Technik hat sich für die vorliegende Erfindung die Aufgabe gestellt, eine Bodendickbeschichtung mit antistatischen Eigenschaften bereitzustellen. Dies sollte ohne die Verwendung von zusätzlichen Versiegelungen gelingen, ohne die als nachteilig bekannte Schichtdickensensibilität und natürlich unter wirtschaftlich vorteilhaften Bedingungen, wobei insbesondere günstige Rohstoffe zur Anwendung gelangen sollten.

Gelöst wurde diese Aufgabe durch eine Bodendickbeschichtung, die als antistatische Komponente Lösungen von Metallsalzen in ionischen Flüssigkeiten enthält.

Überraschend hat sich herausgestellt, dass mit diesem System die Aufgabenstellung voll erfüllt werden konnte, wobei insbesondere in Abhängigkeit von der jeweils gewählten Schichtdicke streuende Ableitfähigkeitswerte vollkommen vermieden werden können. Außerdem treten die sonst mit zunehmender Schichtdicke auftretenden zunehmenden Anteile von Leitlöchern ("Dead Spots") nicht auf. Somit kann mit der erfindungsgemäßen Bodendickbeschichtung die sonst nachteilige Schichtdickensensibilität vermieden werden. Außerdem war nicht zu erwarten, dass die vorgeschlagene Bodendickbeschichtung gleichzeitig sowohl die Anforderungen an die Ableitfähigkeiten als auch an die ESD-Systeme in einer einzigen Schicht erfüllen können. Auf diese Weise ist es möglich, auf eine relativ preiswerte Art Bodendickbeschichtungen herzustellen, die sich kaum mehr elektrostatisch aufladen, wobei es auch möglich ist, in Abhängigkeit vom jeweiligen Anwendungsbereich die erfindungswesentliche antistatische Komponente mit weiteren leitfähigen Komponenten zu kombinieren, um die Performance des Beschichtungsproduktes gezielt einzustellen. Dies ist insbesondere in der Elektronikindustrie von Vorteil, da in diesem speziellen Anwendungsbereich bislang ausschließlich dünnschichtige Systeme verwendet werden konnten, die außerdem nur sehr teuer zu realisieren sind auch hinsichtlich ihrer Dauerhaftigkeit deutlich im Nachteil sind.

Das erfindungsgemäße Beschichtungssystem basiert auf der Verwendung von ionischen Flüssigkeiten als Lösemittel (Compatibilizer) für Metallsalze (Leitsalze), insbesondere Alkalimetallsalze, wobei diesen Mischungen weitere organische Lösemittel oder Dispergiermittel zugesetzt werden können, um einen möglichst hohen Leitsalzgehalt einzustellen.

Als ionische Flüssigkeiten ("ionic liquids") bezeichnet man allgemein bei niedrigen Temperaturen (< 100 °C) schmelzende Salze, die eine neuartige Klasse von Flüssigkeiten mit nichtmolekularem, ionischem Charakter darstellen. Im Gegensatz zu klassischen Salzschmelzen, die hochschmelzende, hochviskose und sehr korrosive Medien darstellen, sind ionische Flüssigkeiten bereits bei niedrigen Temperaturen flüssig und relativ niedrigviskos (K.R. Seddon, J. Chem. Technol. Biotechnol. 1997, 68, 351-356).

Ionische Flüssigkeiten bestehen in den meisten Fällen aus Anionen wie zum Beispiel Halogeniden, Carboxylaten, Phosphaten, Thiocyanat, Isothiocyanat, Dicyanamid, Sulfat, Alkylsulfaten, Sulfonaten, Alkylsulfonaten, Tetrafluoroborat, Hexafluoro-phosphat oder auch Bis(trifluormethylsulfonyl)imid kombiniert mit zum Beispiel substituierten Ammonium-, Phosphonium-, Pyridinium- oder Imidazolium-Kationen, wobei die vorgenannten Anionen und Kationen eine kleine Auswahl aus der großen Zahl möglicher Anionen und Kationen darstellen, weshalb kein Anspruch auf Vollständigkeit erhoben oder gar eine Einschränkung vorgegeben werden soll.

Von der vorliegenden Erfindung wird hinsichtlich der ionischen Flüssigkeiten eine Variante mitumfasst, bei der diese zur Verbesserung der Löslichkeit der Kationen ein Additiv enthalten, welches auch als Komplexbildner fungieren kann. In diesem Zusammenhang sind insbesondere Kronenether oder deren Kryptanden und organische Komplexbildner, wie bspw. EDTA, vorgesehen. Aus der Reihe der in Frage kommenden Kronenether haben sich solche als geeignet erwiesen, die eine Sauerstoffzahl zwischen 4 und 10 aufweisen. Die ebenfalls in Frage kommenden Sonderformen der Kronenether, nämlich die sog. Kryptanden, sind insbesondere zur selektiven Komplexbildung mit Alkali- oder Erdalkali-Metallionen geeignet.

Die erfindungsgemäß mitverwendeten ionischen Flüssigkeiten setzen sich aus mindestens einer quartären Stickstoff- und/oder Phosphorverbindung und mindestens einem Anion zusammen und ihr Schmelzpunkt liegt unterhalb ca. + 250 °C, vorzugsweise unterhalb ca. + 150 °C, insbesondere unterhalb ca. +100°C. Die Mischungen von ionischen Flüssigkeiten und Lösemittel ist bei Raumtemperatur flüssig.

Die in der erfindungsgemäßen Bodendickbeschichtung bevorzugt eingesetzten ionischen Flüssigkeiten bestehen aus mindestens einem Kation der allgemeinen Formeln:

R¹R²R³R⁴N⁺ (I)

R¹R²N⁺=CR³R⁴ (II)

R¹R²R³R⁴P⁺ (III)

R¹R²P⁺=CR³R⁴ (IV)

in denen R¹,R²,R³,R⁴ gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden C₁-C₃₀-Alkylrest, insbesondere -CH₃) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C (O)-, -(O)C-O-, -NH-C(O)-, -(O)C-NH, -(CH₃)N-C(O)-, -(O)C-N(CH₃)-, -S (O₂)-O-, -O-S(O₂)-, -S(O₂)-NH-, -NH-S(O₂)-, -S(O₂)-N(CH₃)-, -N(CH₃)-S(O₂)-, unterbrochenen linearen oder verzweigten, gegebenenfalls Doppelbindungen enthaltenden aliphatischen Kohlenwasserstoffrest mit 2 bis 30 Kohlenstoffatomen, einen endständig OH, OR', NH₂, N(H)R', N(R')₂ (mit R' gleich einem gegebenenfalls Doppelbindungen enthaltenden C₁-C₃₀-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß -(R⁵-O)ₙ-R⁶ bedeuten, wobei R⁵ ein 2 bis 4 Kohlenstoffatome enthaltender linearer oder verzweigter Kohlenwasserstoffrest, n 1 bis 100, vorzugsweise 2 bis 60, ist und R⁶ Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-R⁷ mit R⁷ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

Als Kationen kommen ferner lonen in Betracht, die sich von gesättigten oder ungesättigten cyclischen Verbindungen sowie von aromatischen Verbindungen mit jeweils mindestens einem dreibindigen Stickstoffatom in einem 4- bis 10-, vorzugsweise 5- bis 6-gliedrigen heterocyclischen Ring ableiten, der gegebenenfalls substituiert sein kann. Solche Kationen lassen sich vereinfacht (d. h. ohne Angabe von genauer Lage und Zahl der Doppelbindungen im Molekül) durch die nachstehenden allgemeinen Formeln (V), (VI) und (VII) beschreiben, wobei die heterocyclischen Ringe gegebenenfalls auch mehrere Hetereoatome enthalten können. 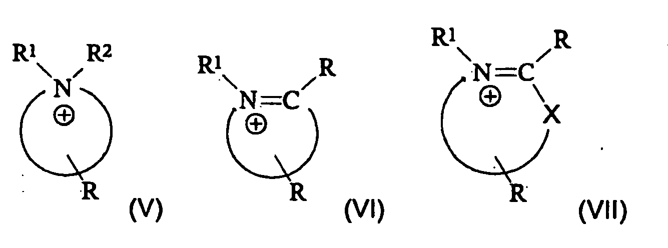 R¹ und R² besitzen dabei die vorgenannte Bedeutung, R ist ein Wasserstoff, ein linearer oder verzweigter gegebenenfalls Doppelbindungen enthaltender aliphatischer Kohlenwasserstoffrest mit 1 bis 30 Kohlenstoffatomen, ein cycloaliphatischer gegebenenfalls Doppelbindungen enthaltender Kohlenwasserstoffrest mit 5 bis 40 Kohlenstoffatomen, ein aromatischer Kohlenwasserstoffrest mit 6 bis 40 Kohlenstoffatomen oder ein Alkylarylrest mit 7 bis 40 Kohlenstoffatomen.

Die cyclischen Stickstoffverbindungen der allgemeinen Formeln (V),(VI) und (VII) können unsubstituiert (R = H), einfach oder auch mehrfach durch den Rest R substituiert sein, wobei bei einer Mehrfachsubstitution durch R die einzelnen Reste R unterschiedlich sein können; X ist ein Sauerstoffatom, ein Schwefelatom oder ein substituiertes Stickstoffatom (X = O, S, NR¹).

Beispiele für cyclische Stickstoffverbindungen der vorgenannten Art sind Pyrrolidin, Dihydropyrrol, Pyrrol, Imidazolin, Oxazolin, Oxazol, Thiazolin, Thiazol, Isoxazol, Isothiazol, Indol, Carbazol, Piperidin, Pyridin, die isomeren Picoline und Lutidine, Chinolin und iso-Chinolin.

Als Kationen kommen weiterhin Ionen in Betracht, die sich von gesättigten acyclischen, gesättigten oder ungesättigten cyclischen Verbindungen sowie von aromatischen Verbindungen mit jeweils mehr als einem dreibindigen Stickstoffatom in einem 4- bis 10-, vorzugsweise 5- bis 6-gliedrigen heterocyclischen Ring ableiten. Diese Verbindungen können sowohl an den Kohlenstoffatomen als auch an den Stickstoffatomen substituiert sein. Sie können ferner durch, gegebenenfalls substituierte, Benzolringe und/oder Cyclohexanringe unter Ausbildung mehrkerniger Strukturen anneliert sein. Beispiele für solche Verbindungen sind Pyrazol, 3,5-Dimethylpyrazol, Imidazol, Benzimidazol, N-Methylimidazol, Dihydropyrazol, Pyrazolidin, Pyrazin, Pyridazin, Pyrimidin, 2,3-, 2,5- und 2,6-Dimethylpyrazin, Cimolin, Phthalazin, Chinazolin, Phenazin und Piperazin. Insbesondere vom Imidazol und seinen Alkyl- und Phenylderivaten abgeleitete Kationen der allgemeinen Formel (VIII) haben sich als Bestandteil ionischer Flüssigkeit bewährt.

Bevorzugte Kationen sind weiterhin solche, die zwei Stickstoffatome enthalten und durch die allgemeine Formel (VIII) wiedergegeben sind 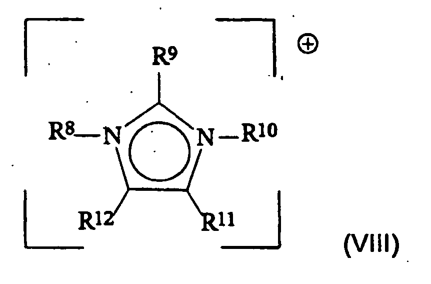 in denen R⁸,R⁹,R¹⁰,R¹¹,R¹² gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (O, NH, NR' mit R' gleich einem gegebenenfalls Doppelbindungen enthaltenden C₁-C₃₀-Alkylrest), unterbrochenen linearen oder verzweigten gegebenenfalls Doppelbindungen enthaltenden aliphatischen Kohlenwasserstoffrest mit 1 bis 30 Kohlenstoffatomen, einen durch ein oder mehrere Funktionalitäten, ausgewählt aus der Gruppe-O-C(O)-,-(O)C-O-,-NH-C(O)-,-(O)C-NH, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)-, -N(CH₃)-S(O₂)-, unterbrochenen linearen oder verzweigten gegebenenfalls Doppelbindungen enthaltenden aliphatischen Kohlenwasserstoffrest mit 1 bis 30 Kohlenstoffatomen, einen endständig OH, OR', NH₂, N(H)R', N(R')₂ mit R' gleich einem gegebenenfalls Doppelbindungen enthaltenden C₁-C₃₀-Alkylrest, funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether aufgebaut aus -(R⁵-O)ₙ-R⁶ bedeuten, wobei R⁵ein 2 bis 4 Kohlenstoffatome enthaltender Kohlenwasserstoffrest, n =1 bis 100 ist und R⁶ Wasserstoff, einen linearen oder verzweigten gegebenenfalls Doppelbindungen enthaltenden aliphatischen Kohlenwasserstoffrest mit 1 bis 30 Kohlenstoffatomen einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-R⁷ mit R⁷ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

Die erfindungsgemäß in der Bodendickbeschichtung enthaltenen ionischen Flüssigkeiten bestehen aus mindestens einem der vorgenannten Kationen, kombiniert mit jeweils mindestens einem Anion. Bevorzugte Anionen werden ausgewählt aus der Gruppe der Halogenide, Bis(perfluoralkylsulfonyl)amide bzw. -imide wie z.B. Bis(trifluormethylsulfonyl)imid , Alkyl- und Aryltosylate, Perfluoralkyltosylate, Nitrat, Sulfat, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrachloroaluminat, Saccharinat. Weiterhin sind Anionen von Dicyanamid, Thiocyanat, Isothiocyanat, Tetraphenylborat, Tetrakis(pentafluorphenyl)borat, Tetrafluoroborat, Hexafluorophosphat, Polyetherphosphate und Phosphat als ebenfalls bevorzugt anzusehen.

Entscheidend ist, dass in der gebrauchsfertigen Mischung, die erfindungsgemäß als Antistatikum in der Bodendickbeschichtung enthalten ist, die Komponenten (ionische Flüssigkeit(en) + Leitsalz(e) + Lösemittel) in einer ausreichenden Menge vorhanden sind, so dass die Mischung einen möglichst hohen Anteil an Leitsalz(en) enthält und vorzugsweise bei < 100 °C, besonders bevorzugt bei Raumtemperatur flüssig ist.

Erfindungsgemäß bevorzugt sind solche Bodendickbeschichtungen, die als ionische Flüssigkeiten bzw. deren Mischungen solche Kombination enthalten, bei denen das Kation aus der Reihe 1,3-Dialkylimidazolium-, 1,2,3-Trialkylimidazolium-, 1,3-Dialkylimidazolinium- und 1,2,3-Trialkyl-imidazoliniumkations stammt und bei denen das Anion ausgewählt wird aus der Gruppe der Halogenide, Bis(trifluormethylsulfonyl)imid, Perfluoralkyltosylate, Alkylsulfate und -sulfonate, perfluorierte Alkylsulfonate und -sulfate, Perfluoralkylcarboxylate, Perchlorat, Dicyanamid, Thiocyanat, Isothiocyanat, Tetraphenylborat, Tetrakis(pentafluorphenyl)borat, Tetrafluoroborat, Hexafluorophosphat darstellen. Darüber hinaus können auch einfache, kommerziell erhältliche, azyklische quarternäre

Ammoniumsalze wie z.B. TEGO^{®} IL T16ES, TEGO^{®} IL K5MS oder auch Rezol Heqams (Produkte der Goldschmidt GmbH) eingesetzt werden.

Im Allgemeinen werden mit Mischungen, bestehend aus einem Mischungsverhältnis von ionischer Flüssigkeit zu Alkalimetallsalz im Bereich von 1: 10 bis 10 : 1, deutliche Erniedrigungen der Oberflächenwiderstände erhalten. In einer solchen Mischung sollte das Alkalimetallsalz mit-einem Anteil von 0,1 bis 75 Gew.-%, vorzugsweise mit einem Anteil von 0,5 bis 50 Gew.%, besonders bevorzugt mit einem Anteil von 5 bis 30 Gew.-% enthalten sein.

Die erfindungsgemäß in der Bodendickbeschichtung mit verwendeten Salze sind die auf diesem Gebiet üblicherweise verwendeten einfachen oder komplexen Verbindungen, wie beispielsweise insbesondere Alkalimetallsalze der Anionen: Bis(perfluoralkylsulfonyl)amid bzw. -imid wie z.B. Bis(trifluormethylsulfonyl)imid, Alkyl- und Aryltosylate, Perfluoralkyltosylate, Nitrat, Sulfat, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrarchloroaluminat, Saccharinat, vorzugsweise Anionen der Verbindungen Thiocyanat, Isothiocyanat, Dicyanamid, Tetraphenylborat, Tetrakis(pentafluorphenyl) borat, Tetrafluoroborat, Hexafluorophosphat, Phosphat und Polyetherphosphate.

Bevorzugte Mischungen sind insbesondere solche, die als Alkalimetallsalz NaSCN bzw. NaN(CN)₂ und KPF₆ und ein Imidazolinium- bzw. Imidazoliumsalz, vorzugsweise 1-Ethyl-3-methylimidazoliumethylsulfat, 1-Ethyl-3-methylimidazoliumhexafluoroposphat und als ionische Flüssigkeit 1-Ethyl-3-methylimidazoliumethylsulfat /NaN(CN)₂oder 1-Ethyl-3-methylimidazoliumhexafluoroposphat /NaN(CN)₂.

Die vorliegende Erfindung sieht Varianten vor, bei denen die Beschichtungsmatrix der beanspruchten Bodendickbeschichtung aus mindestens einem Polyurethan, Epoxidharz, Polyesterharz, Acrylat, Methacrylat oder Vinylester besteht. Außerdem sieht die vorliegende Erfindung vor, dass die Beschichtungsmatrix der Bodendickbeschichtung Füllstoffe und/oder Pigmente enthält, die vorzugsweise leitfähigen Eigenschaften aufweisen. Hier kommen insbesondere Karbonfasern wie z. B. auf Basis PAN, Pech und Reyon, Graphit, Russ, Metalloxide und Metalllegierungsoxide in Frage. Ebenfalls geeignet sind Füllstoffe und Pigmente, die mit Komponenten beschichtet sind, die ihnen leitfähige Eigenschaften verleihen. Auch in diesem Fall sind Graphite, Russe und Metalloxide beziehungsweise Metalllegierungsoxide besonders geeignet.

Die beanspruchte Bodendickbeschichtung ist nicht auf spezielle Formulierungen beschränkt, die die antistatische Komponente in definierten Verbindungen enthält. Allerdings empfiehlt es sich, die antistatische Komponente in Mengen der Bodendickbeschichtung zuzumischen, die zwischen 0,01 und 30 Gew.-% und vorzugsweise zwischen 0,1 und 20 Gew.-% liegen.

Entsprechend ihrer Bezeichnung als Bodendickbeschichtung sollte das beanspruchte System eine Schichtdicke aufweisen, die besonders bevorzugt zwischen 2 und 4 mm beträgt. Generell kann die Schichtdicke der neuen Bodendickbeschichtung eine Untergrenze von 0,2 cm aufweisen, wobei Obergrenzen von bis zu 2,0 cm, bevorzugt bis 1,0 cm und besonders bevorzugt bis 6mm ebenfalls als geeignet anzusehen sind.

Der Härtebereich für leichte bis mittlere mechanische Beanspruchung liegt üblicherweise zwischen 65 bis 80 Shore D. Die Mindesthärte für begehbare Flächen ist vorzugsweise Shore A 75.

Neben der Bodendickbeschichtung selbst umfasst die vorliegend Erfindung auch deren Verwendung im bauchemischen Bereich und insbesondere für Montagehallen und Gewerbebauten der Elektronik- und Elektroindustrie. Außerdem eignen sich die beanspruchten Bodendickbeschichtungen für Gebäude und ganz allgemein für Anwendungsbereiche, die mit Gefahren durch elektrostatische Aufladungen verbunden sind und die deshalb auch einen besonderen Explosionsschutz erfordern.

Insgesamt zeichnen sich die beschriebenen Dickbeschichtungen dadurch aus, dass sie sich kaum mehr elektrostatisch aufladen, wobei sie insbesondere durch die passgenaue Kombination der in ihnen enthaltenen Additive mit weiteren leitfähigen Komponenten dem jeweiligen Verwendungszweck genau angepasst werden können. Aufgrund der spezifischen Inhaltsstoffe sind diese Bodendickbeschichtungen preisgünstig herzustellen und auch in Anwendungsgebieten einsetzbar, für die bislang nur dünnschichtige Lacke als geeignet erschienen.

Die nachfolgenden Beispiele verdeutlichen die Vorteile der vorliegenden Erfindung.

### Beispiele:

In den erfindungsgemäßen Rezepturen 4 und 5 wurden Antistatika der folgenden Zusammensetzung verwendet:
Die synergistische Mischung aus ionischer Flüssigkeit, Leitsalz und organischem Lösemittel wurde mit Hilfe eines Magnetrührers hergestellt. Für das Antistatikum 1 wurden die Komponenten Ethyl-bis(polyethoxyethanol)-talgalkylammoniumethylsulfat (Tego^{®} IL T16ES) als ionische Flüssigkeit äquimolar mit Calciumthiocyanat als Leitsalz gemischt. Als Antistatikum 2 wurde eine äquimolare Mischung, bestehend aus 1,3-Dimethylimidazoliummethylsulfat als ionische Flüssigkeit und Lithium-bis (trifluormethylsulfonyl)imid als Leitsalz eingesetzt.
Die Epoxidharz-Komponente war auf Basis Glycidylpolyether von 2,2-bis(4-hydroxyphenyl)propan (Bisphenol A). Als Reaktivverdünner diente Ethyltriglycolmethacrylat (ETMA).

| **Rezeptur 1 (Vergleich)** | | | |
|---|---|---|---|
| | Epoxidharz | - | 37 Gew.Teile |
| | Reaktiwerdünner | - | 5 Gew.Teile |
| | Benzylalkohol | - | 7,3 Gew.Teile |
| | Kreide/SiO2 (Füllstoff) | - | 49 Gew.Teile |
| | Tego Airex 940 | - | 1,5 Gew.Teile |
| | (Entlüfter/Entschäumer) | | |
| | Kohlenstofffaser | - | 0,2 Gew.Teile |
| | ***Antistatikum*** | - | ohne |

| **Rezeptur 2 (Vergleich)** | | | |
|---|---|---|---|
| | Epoxidharz | - | 37 Gew.Teile |
| | Reaktiwerdünner | - | 5 Gew.Teile |
| | Benzylalkohol | - | 5,5 Gew.Teile |
| | Kreide/SiO2 (Füllstoff) | - | 34 Gew.Teile |
| | Tego Airex 940 | - | 1,5 Gew.Teile |
| | (Entlüfter/Entschäumer) | | |
| | Kohlenstofffaser | - | ohne |
| | Leitfähiger Füllstoff | - | 15 Gew.Teile |
| | **Antistatikum** | - | ohne |

| **Rezeptur 3 (Vergleich)** | | | |
|---|---|---|---|
| | Epoxidharz | - | 37 Gew.Teile |
| | Reaktiwerdünner | - | 5 Gew.Teile |
| | Benzylalkohol | - | 5,5 Gew.Teile |
| | Kreide/SiO2 | - | 34 Gew.Teile |
| | (Füllstoff) | | |
| | Tego Airex 940 | - | 1,5 Gew.Teile |
| | (Entlüfter/Entschäumer) | | |
| | Kohlenstofffaser | - | 0,2 Gew.Teile |
| | Leitfähiger Füllstoff | - | 15 Gew.Teile |
| | **Antistatikum** | - | ohne |

| **Rezeptur 4** | | | |
|---|---|---|---|
| | Epoxidharz | - | 37 Gew.Teile |
| | Reaktiwerdünner | - | 5 Gew.Teile |
| | Benzylalkohol | - | 5,3 Gew.Teile |
| | Kreide/SiO2 (Füllstoff) | - | 49 Gew.Teile |
| | Tego Airex 940 | - | 1,5 Gew.Teile |
| | (Entlüfter/Entschäumer) | | |
| | Kohlenstofffaser | - | 0,2 Gew.Teile |
| | ***Antistatikum 1*** | - | 2 Gew.Teile |

| **Rezeptur 5** | | | |
|---|---|---|---|
| | Epoxidharz | - | 37 Gew.Teile |
| | Reaktiwerdünner | - | 5 Gew.Teile |
| | Benzylalkohol | - | 5,5 Gew.Teile |
| | Kreide/SiO2 (Entlüfter) | - | 49 Gew.Teile |
| | Tego Airex 940 | - | 1,5 Gew.Teile |
| | (Entlüfter/Entschäumer) | | |
| | Kohlenstofffaser | - | ohne |
| | ***Antistatikum2*** | - | 2 Gew.Teile |

Alle Rezepturen wurden in stöchiometrischem Verhältnis mit einem aminischen Standardhärter des Typs Aradur 43 ausgehärtet und z. T. in unterschiedlichen Schichtdicken appliziert.
Als Leitlack diente ein wässriges Epoximaterial mit einem Oberflächenwiderstand im Bereich von 10⁴ Ohm. Folgende Parameter wurden ermittelt:

| | Schichtdicke | Erdableitwiderstand | Personenableitwiderstand | Body Voltage Generation | Decay Time |
|---|---|---|---|---|---|
| Rezeptur 4 | 1,5 mm | 10⁴ Ohm | 10⁶ Ohm | <50V | < 0,5 sec |
| | 3,0 mm | 10⁴ Ohm | 10⁶ Ohm | <50V | < 0,5 sec |
| | 4,0 mm | 10⁴ Ohm | 10⁶ Ohm | <50V | < 0,5 sec |
| Rezeptur 1 | 1,5 mm | 10⁴ Ohm | 10⁷ Ohm | ∼ 500 V | 3 sec |
| | 3,0 mm | 10⁴ Ohm | 10⁸ Ohm | ∼ 500 V | 4 sec |
| Rezeptur 5 | 3,0 mm | 10⁸ Ohm | 10⁸ Ohm | <50V | < 0,5 sec |
| Rezeptur 2 | 0,5 mm | 10⁷ Ohm | 10⁷ Ohm | ∼100V | < 1 sec |
| | 1,0 mm | 10⁸ Ohm | 10⁹ Ohm | ∼ 150V | < 1 sec |
| Rezeptur 3 | 1,5 mm | 10⁴ Ohm | 10⁶ Ohm | ∼ 150V | < 1 sec |
| | 3,0 mm | 10⁶ Ohm | 10⁶ Ohm | ∼ 200 V | <2sec |
| | 4,0 mm | 10⁸ Ohm | 10⁹ Ohm | ∼ 500 V | < 4 sec |

## Patentansprüche

1. Bodendickbeschichtung mit antistatischen Eigenschaften, **dadurch gekennzeichnet, dass** sie als antistatische Komponente Lösungen von Metallsalzen in ionischen Flüssigkeiten enthält.

2. Bodendickbeschtchtung nach Anspruch 1, **dadurch gekennzeichnet, dass** die ionische Flüssigkeit aus mindestens einem Kation der allgemeinen Formeln (I), (II), (III), (IV)
R¹R²R³R⁴N⁺ (I)
R¹R²N⁺=CR³R⁴ (II)
R¹R²R³R⁴P⁺ (III)
R¹R²P⁺=CR³R⁴ (IV)
besteht,
in denen R¹,R²,R³,R⁴ gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (O, NH, NR' mit R' gleich einem gegebenenfalls Doppelbindungen enthaltenden C₁-C₃₀-Alkylrest, insbesondere -CH₃) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(O)C-NH, -(CH₃)N-C(O)-, -(O) C-N(CH₃)-, -S(O₂)-O-, -O-S(O₂)-, -S(O₂)-NH-, -NH-S(O₂)-, -S(O₂)-N (CH₃)-, -N(CH₃)-S(O₂)-, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', NH₂, N(H)R', N(R')₂ (mit R' gleich einem gegebenenfalls Doppelbindungen enthaltenden C₁-C₃₀-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß -(R⁵-O)ₙ-R⁶ bedeuten,
wobei
R⁵ ein 2 bis 4 Kohlenstoffatome enthaltender linearer oder verzweigter Kohlenwasserstoffrest,
n 1 bis 100, vorzugsweise 2 bis 60, ist und
R⁶ Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-R⁷ mit
R⁷ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

3. Bodendickbeschichtung nach Anspruch 1, **dadurch gekennzeichnet, dass** die ionischen Flüssigkeiten bestehen aus mindestens einem Kation der allgemeinen Formeln (V), (VI), VII) bestehen 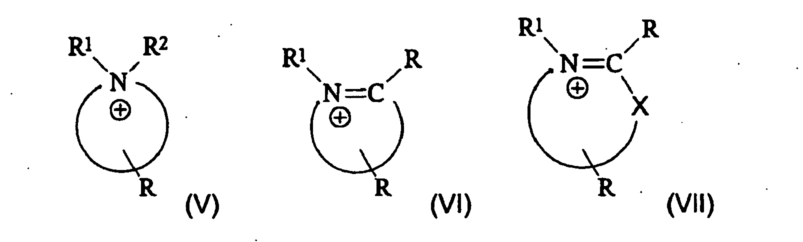
R ist ein Wasserstoff, ein linearer oder verzweigter gegebenenfalls Doppelbindungen enthaltender aliphatischer Kohlenwasserstoffrest mit 1 bis 30 Kohlenstoffatomen, ein cycloaliphatischer gegebenenfalls Doppelbindungen enthaltender Kohlenwasserstoffrest mit 5 bis 40 Kohlenstoffatomen, ein aromatischer Kohlenwasserstoffrest mit 6 bis 40 Kohlenstoffatomen oder ein Alkylarylrest mit 7 bis 40 Kohlenstoffatomen und
R¹ und R² die vorgenannte Bedeutung haben und
X ein Sauerstoffatom, ein Schwefelatom oder ein substituiertes Stickstoffatom (X = O, S, NR¹) sein kann.

4. Bodendickbeschichtung nach Anspruch 1, **dadurch gekennzeichnet, dass** die ionischen Flüssigkeiten bestehen aus mindestens einem Kation der allgemeinen Formel (VIII) 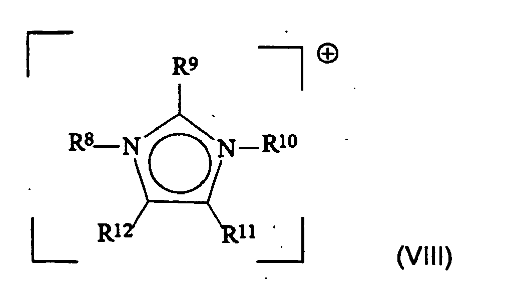 in denen
R⁸,R⁹,R¹⁰,R¹¹,R¹² gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (O, NH, NR' mit R' gleich einem gegebenenfalls Doppelbindungen enthaltenden C₁-C₃₀-Alkylrest), unterbrochenen linearen oder verzweigten gegebenenfalls Doppelbindungen enthaltenden aliphatischen Kohlenwasserstoffrest mit 1 bis 30 Kohlenstoffatomen, einen durch ein oder mehrere Funktionalitäten, ausgewählt aus der Gruppe -O-C(O)-, -(O)C-O-, -NH-C (O)-, -(O)C-NH, -(CH₃)N-C(O)-, -(O)C-N(CH₃)-, -S(O₂)-O-, -O-S(O₂)-, -S (O₂)-NH-, -NH-S(O₂)-, -S(O₂)-N(CH₃)-, -N(CH₃)-S(O₂)-, unterbrochenen linearen oder verzweigten gegebenenfalls Doppelbindungen enthaltenden aliphatischen Kohlenwasserstoffrest mit 1 bis 30 Kohlenstoffatomen, einen endständig OH, OR', NH₂, N(H)R', N(R')₂ mit R' gleich einem gegebenenfalls Doppelbindungen enthaltenden C₁-C₃₀-Alkylrest, funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether aufgebaut aus -(R⁵-O)ₙ-R⁶ bedeuten,
wobei
R⁵ ein 2 bis 4 Kohlenstoffatome enthaltender Kohlenwasserstoffrest,
n 1 bis 100 ist und
R⁶ Wasserstoff, einen linearen oder verzweigten gegebenenfalls Doppelbindungen enthaltenden aliphatischen Kohlenwasserstoffrest mit 1 bis 30 Kohlenstoffatomen, einen cycloaliphatischen gegebenenfalls Doppelbindungen enthaltenden Kohlenwasserstoffrest mit 5 bis 40 Koh-lenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-R⁷ mit
R⁷ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen oder einem Alkylarylrest mit 7 bis 40 Kohlenstoffatomen ist.

5. Bodendickbeschichtung nach einem der Ansprüche 1 bis 4, **dadurch gekennzeichnet, dass** die ionischen Flüssigkeiten mindestens ein Anion enthalten, ausgesucht aus der Gruppe der Halogenide, Bis(perfluoralkylsulfonyl)amide bzw. -imide, Bis(trifluormethylsulfonyl)-imid, Alkyl- und Aryltosylate, Perfluoralkyltosylate, Nitrat, Sulfat, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrarchloroaluminat, Saccharinat, Anionen der Verbindungen Dicyanamid, Thiocyanat, Isothlocyanat, Tetraphenylborat, Tetrakis(pentafluorphenyl)borat, Tetrafluoroborat, Hexafluorophosphat, Polyetherphosphate und Phosphate.

6. Bodendickbeschichtung nach einem der Ansprüche 1 bis 5, **dadurch gekennzeichnet, dass** die ionischen Flüssigkeiten mindestens ein Kation enthalten, ausgesucht aus der Gruppe 1,3-Dialkylimidazolium-, 1,2,3-Trialkylimidazolium-, 1,3-Dialkylimidazolinium- und 1,2,3-Trialkylimidazoliniumkation und mindestens ein Anion enthalten, ausgesucht aus der Gruppe der Halogenide, Bis(trifluormethylsulfonyl)imid, Perfluoralkyltosylate, Alkylsulfate und -sulfonate, perfluorierte Alkylsulfonate und -sulfate, Perfluoralkylcarboxylate, Perchlorat, Dicyanamid, Thiocyanat, Isothiocyanat, Tetraphenylborat, Tetrakis-(pentafluorphenyl)borat, Tetrafluoroborat, Hexafluorophosphat, acyklische quarternäre Ammoniumsalze.

7. Bodendickbeschichtung nach einem der Ansprüche 1 bis 6, **dadurch gekennzeichnet, dass** die ionischen Flüssigkeiten mindestens ein Additiv in Form einer Verbindung, die die Löslichkeit des Kations verbessert, oder eines Komplexbildners enthalten, insbesondere einen Kronenether oder dessen Kryptanden und/oder EDTA.

8. Bodendickbeschichtung nach einem der Ansprüche 1 bis 7, **dadurch gekennzeichnet, dass** in den ionischen Flüssigkeiten mindestens ein Salz gelöst ist, ausgesucht aus der Gruppe der Alkalimetallsalze der Anionen: Bis(perfluoralkylsulfonyl)amid bzw. -imid wie z.B. Bis (trifluormethylsulfonyl)imid, Alkyl- und Aryltosylate, Perfluoralkyltosylate, Nitrat, Sulfat, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrarchloroaluminat, Saccharinat, vorzugsweise Anionen der Verbindungen Thiocyanat, Isothiocyanat, Dicyanamid, Tetraphenylborat, Tetrakis(pentafluorphenyl)borat, Tetrafluoroborat, Hexafluorophosphat, Phosphat und Polyetherphosphate.

9. Bodendickbeschichtung nach einem der Ansprüche 1 bis 8, **dadurch gekennzeichnet, dass** die Beschichtungsmatrix aus mindestens einem Polyurethan, Epoxidharz, Polyesterharz, Acrylat, Methacrylat oder Vinylester besteht.

10. Bodendickbeschichtung nach einem der Ansprüche 1 bis 9, **dadurch gekennzeichnet, dass** die Beschichtungsmatrix Füllstoffe und/oder Pigmente, vorzugsweise mit leitfähigen Eigenschaften, wie z. B. Karbonfasern, Graphit, Russ, Metall(legierungs-)oxide und/oder damit beschichtete Füllstoffe und/oder Pigmente enthält.

11. Bodendickbeschichtung nach einem der Ansprüche 1 bis 10, **dadurch gekennzeichnet, dass** sie die antistatische Komponente in Mengen zwischen 0,01 und 30 Gew.-% und vorzugsweise zwischen 0,1 und 20 Gew.-% enthält.

12. Bodendickbeschichtung nach einem der Ansprüche 1 bis 11, **dadurch gekennzeichnet, dass** sie eine Schichtdicke bis 2,0 cm, vorzugsweise bis 1,0 cm, besonders bevorzugt bis 6 mm und insbesondere zwischen 2 und 4 mm aufweist.

13. Verwendung der Bodendickbeschichtung nach einem der Ansprüche 1 bis 12 im bauchemischen Bereich und insbesondere für Montagehallen und Gewerbebauten der Elektronik- und Elektroindustrie sowie Gebäude und Anwendungsbereiche, die Gefahren durch elektrostatische Aufladungen ausgesetzt sind.

## Claims

1. High-build floor coating with antistatic properties, **characterized in that** it comprises, as antistatic component, solutions of metal salts in ionic liquids.

2. High-build floor coating according to Claim 1, **characterized in that** the ionic liquid is composed of at least one cation of the general formulae (I) , (II) , (III) , (IV)
R¹R²R³R⁴N⁺ (I)
R¹R²N⁺=CR³R⁴ (II)
R¹R²R³R⁴P⁺ (III)
R¹R²P⁺=CR³R⁴ (IV)
in which R¹, R² , R³, and R⁴ are identical or different and are hydrogen, a linear or branched aliphatic hydrocarbon radical having from 1 to 30 carbon atoms and, if appropriate, containing double bonds, a cycloaliphatic hydrocarbon radical having from 5 to 40 carbon atoms and, if appropriate, containing double bonds, an aromatic hydrocarbon radical having from 6 to 40 carbon atoms, an alkylaryl radical having from 7 to 40 carbon atoms, a linear or branched aliphatic hydrocarbon radical having from 2 to 30 carbon atoms and having interruption by one or more heteroatoms (0, NH, NR', where R' is a C₁-C₃₀-alkyl radical, if appropriate containing double bonds, in particular -CH₃) and, if appropriate, containing double bonds, a linear or branched aliphatic hydrocarbon radical having from 2 to 30 carbon atoms and having interruption by one or more functionalities selected from the group of -O-C(O)-, -(O)C-O-, -NH-C(O)-, -(O)C-NH-, -(CH₃)N-C(O)-, -(O)C-N(CH₃)-, -S(O₂)-O-, -O-S(O₂)-, -S(O₂)-NH-, -NH-S (O₂)-, -S(O₂)-N(CH₃) -, -N(CH₃)-S(O₂) - and, if appropriate, containing double bonds, a linear or branched aliphatic or cycloaliphatic hydrocarbon radical having from 1 to 30 carbon atoms and having terminal functionalization by OH, OR', NH₂, N(H)R', N(R')₂, (where R' is a C₁-C₃₀-alkyl radical, if appropriate containing double bonds) and, if appropriate, containing double bonds, or a block- or random-structure polyether -(R⁵-O)ₙ-R⁶,
where
R⁵ is a linear or branched hydrocarbon radical containing from 2 to 4 carbon atoms,
n is from 1 to 100, preferably 2 to 60, and
R⁶ is hydrogen or a linear or branched aliphatic hydrocarbon radical having from 1 to 30 carbon atoms and, if appropriate, containing double bonds, a cycloaliphatic hydrocarbon radical having from 5 to 40 carbon atoms and, if appropriate, containing double bonds, an aromatic hydrocarbon radical having from 6 to 40 carbon atoms, an alkylaryl radical having from 7 to 40 carbon atoms, or a -C(O)-R⁷ radical, where
R⁷ is a linear or branched aliphatic hydrocarbon radical having from 1 to 30 carbon atoms and, if appropriate, containing double bonds, a cycloaliphatic hydrocarbon radical having from 5 to 40 carbon atoms and, if appropriate, containing double bonds, an aromatic hydrocarbon radical having from 6 to 40 carbon atoms, or an alkylaryl radical having from 7 to 40 carbon atoms.

3. High-build floor coating according to Claim 1, **characterized in that** the ionic liquids are composed of at least one cation of the general formulae (V), (VI), (VII) 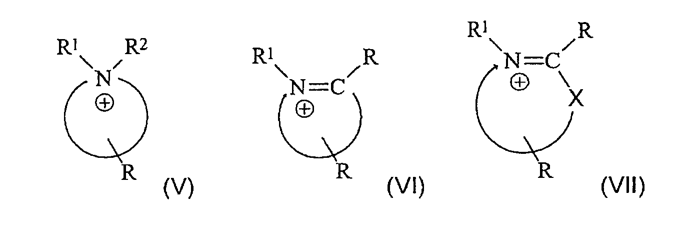
R is hydrogen, a linear or branched aliphatic hydrocarbon radical having from 1 to 30 carbon atoms and, if appropriate, containing double bonds, a cycloaliphatic hydrocarbon radical having from 5 to 40 carbon atoms and, if appropriate, containing double bonds, an aromatic hydrocarbon radical having from 6 to 40 carbon atoms or an alkylaryl radical having from 7 to 40 carbon atoms and
R¹ and R² are as defined above and
X can be an oxygen atom, a sulphur atom or a substituted nitrogen atom (X = O, S, NR¹).

4. High-build floor coating according to Claim 1, **characterized in that** the ionic liquids are composed of at least one cation of the general formula (VIII) 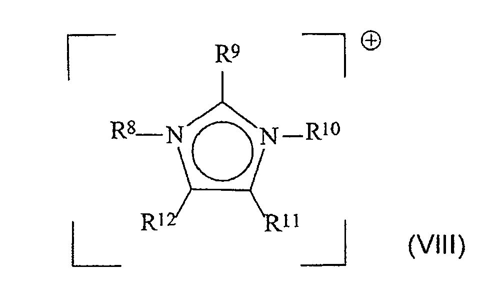 in which
R⁸, R⁹, R¹⁰, R¹¹ and R¹² are identical or different and are hydrogen, a linear or branched aliphatic hydrocarbon radical having from 1 to 30 carbon atoms and, if appropriate, containing double bonds, a cycloaliphatic hydrocarbon radical having from 5 to 40 carbon atoms and, if appropriate, containing double bonds, an aromatic hydrocarbon radical having from 6 to 40 carbon atoms, an alkylaryl radical having from 7 to 40 carbon atoms, a linear or branched aliphatic hydrocarbon radical having from 1 to 30 carbon atoms and having interruption by one or more heteroatoms (O, NH, NR', where R' is a C₁-C₃₀-alkyl radical, if appropriate containing double bonds) and, if appropriate, containing double bonds, a linear or branched aliphatic hydrocarbon radical having from 1 to 30 carbon atoms and having interruption by one or more functionalities selected from the group of -O-C(O)-, -(O)C-O-, -NH-C(O)-, -(O)C-NH-, -(CH₃)N-C(O)-,-(O)C-N(CH₃) -, -S(O₂)-O-, -O-S(O₂)-, -S (O₂)-NH-, -NH-8 (O₂)-, -S (O₂) -N (CH₃) -, -N (CH₃) -S (O₂) - and, if appropriate, containing double bonds, a linear or branched aliphatic or cycloaliphatic hydrocarbon radical having from 1 to 30 carbon atoms and having terminal functionalization by OH, OR', NH₂, N(H)R', N(R')₂ (where R' is a C₁-C₃₀-alkyl radical, if appropriate containing double bonds) and, if appropriate, containing double bonds, or a block- or random-structure polyether - (R⁵-O)ₙ-R⁶,
where
R⁵ is a hydrocarbon radical containing from 2 to 4 carbon atoms,
n is from 1 to 100, and
R⁶ is hydrogen or a linear or branched aliphatic hydrocarbon radical having from 1 to 30 carbon atoms and, if appropriate, containing double bonds, a cycloaliphatic hydrocarbon radical having from 5 to 40 carbon atoms and, if appropriate, containing double bonds, an aromatic hydrocarbon radical having from 6 to 40 carbon atoms, an alkylaryl radical having from 7 to 40 carbon atoms, or a -C(O)-R⁷ radical, where
R⁷ is a linear or branched aliphatic hydrocarbon radical having from 1 to 30 carbon atoms and, if appropriate, containing double bonds, a cycloaliphatic hydrocarbon radical having from 5 to 40 carbon atoms and, if appropriate, containing double bonds, an aromatic hydrocarbon radical having from 6 to 40 carbon atoms, or an alkylaryl radical having from 7 to 40 carbon atoms.

5. High-build floor coating according to any of Claims 1 to 4, **characterized in that** the ionic liquids comprise at least one anion selected from the group of the halides, bis(perfluoroalkyl-sulphonyl)amides or -imides, bis(trifluoromethylsulphonyl)imide, alkyl- and aryltosylates, perfluoroalkyltosylates, nitrate, sulphate, hydrogensulphate, alkyl and aryl sulphates, polyether sulphates and polyethersulphonates, perfluoroalkyl sulphates, sulphonate, alkyl- and arylsulphonates, perfluorinated alkyl- and arylsulphonates, alkyl- and arylcarboxylates, perfluoroalkylcarboxylates, perchlorate, tetrachloroaluminate, saccharinate, anions of the compounds dicyanamide, thiocyanate, isothiocyanate, tetraphenylborate, tetrakis(pentafluorophenyl)borate, tetrafluoroborate, hexafluorophosphate, polyether phosphates and phosphates.

6. High-build floor coating according to any of Claims 1 to 5, **characterized in that** the ionic liquids comprise at least one cation selected from the group of 1,3-dialkylimidazolium, 1,2,3-trialkylimidazolium, 1,3-dialkylimidazolinium and 1,2,3-trialkylimidazolinium cation and comprise at least one anion selected from the group of the halides, bis(trifluoromethylsulphonyl)imide, perfluoroalkyltosylates, alkyl sulphates and alkylsulphonates, perfluorinated alkylsulphonates and perfluorinated alkyl sulphates, perfluoroalkylcarboxylates, perchlorate, dicyanamide, thiocyanate, isothiocyanate, tetraphenylborate, tetrakis(pentafluorophenyl)borate, tetrafluoroborate, hexafluorophosphate, acyclic quaternary ammonium salts.

7. High-build floor coating according to any of Claims 1 to 6, **characterized in that** the ionic liquids comprise at least one additive in the form of a compound which improves the solubility of the cation, or of a complexing agent, in particular a crown ether or its cryptands and/or EDTA.

8. High-build floor coating according to any of Claims 1 to 7, **characterized in that** at least one salt has been dissolved in the ionic liquids and has been selected from the group of the alkali metal salts of the following anions: bis(perfluoroalkylsulphonyl)amide or -imide, e.g. bis(trifluoromethylsulphonyl)imide, alkyl- and aryltosylates, perfluoroalkyltosylates, nitrate, sulphate, hydrogensulphate, alkyl and aryl sulphates, polyether sulphates and polyethersulphonates, perfluoroalkylsulphates, sulphonate, alkyl- and arylsulphonates, perfluorinated alkyl- and arylsulphonates, alkyl-and arylcarboxylates, perfluoroalkylcarboxylates, perchlorate, tetrachloroaluminate, saccharinate, preferably anions of the following compounds: thiocyanate, isothiocyanate, dicyanamide, tetraphenylborate, tetrakis(pentafluorophenyl)-borate, tetrafluoroborate, hexafluorophosphate, phosphate and polyether phosphates.

9. High-build floor coating according to any of Claims 1 to 8, **characterized in that** the coating matrix is composed of at least one polyurethane, epoxy resin, polyester resin, acrylate, methacrylate or vinyl ester.

10. High-build floor coating according to any of Claims 1 to 9, **characterized in that** the coating matrix comprises fillers and/or pigments, preferably with conductive properties, e.g. carbon fibers, graphite, carbon black, metal (alloy) oxides and/or materials coated therewith which are fillers and/or pigments.

11. High-build floor coating according to any of Claims 1 to 10, **characterized in that** the amounts of the antistatic component present are from 0.01 to 30 w.-% and preferably from 0.1 to 20 w.-%.

12. High-build floor coating according to any of Claims 1 to 11, **characterized in that** its layer thickness is up to 2.0 cm, preferably up to 1.0 cm, particularly preferably up to 6 mm and in particular from 2 to 4 mm.

13. Use of the high-build floor coating according to any of Claims 1 to 12 in the construction chemistry sector and in particular for assembly areas and industrial buildings of the electronics and electrical industry and buildings and application sectors exposed to risks due to electrostatic charges.

## Revendications

1. Revêtement épais pour le sol avec des propriétés antistatiques, **caractérisé en ce qu'**il contient, comme composants antistatiques, des solutions de sels métalliques dans des liquides ioniques.

2. Revêtement épais pour le sol selon la revendication 1, **caractérisé en ce que** le liquide ionique est constitué par au moins un cation des formules générales (I), (II), (III), (IV)
R¹R²R³R⁴N⁺ (I)
R¹R²N⁺=CR³R⁴ (II)
R¹R²R³R⁴P⁺ (III)
R¹R²P⁺=CR³R⁴ (IV)
dans lesquelles R¹, R², R³ R⁴ sont identiques ou différents et signifient hydrogène, un radical hydrocarboné aliphatique linéaire ou ramifié, contenant le cas échéant des doubles liaisons, comprenant 1 à 30 atomes de carbone, un radical hydrocarboné cycloaliphatique contenant le cas échéant des doubles liaisons, comprenant 5 à 40 atomes de carbone, un radical hydrocarboné aromatique comprenant 6 à 40 atomes de carbone, un radical alkylaryle comprenant 7 à 40 atomes de carbone, un radical hydrocarboné aliphatique linéaire ou ramifié, contenant le cas échéant des doubles liaisons, interrompu par un ou plusieurs hétéroatomes (O, NH, NR' avec R' représentant un radical C₁-C₃₀-alkyle contenant le cas échéant des doubles liaisons, en particulier -CH₃), comprenant 2 à 30 atomes de carbone, un radical hydrocarboné aliphatique linéaire ou ramifié, contenant le cas échéant des doubles liaisons, interrompu par une ou plusieurs fonctionnalités, choisies dans le groupe -OC(O) -, - (O) C-O-, -NH-C(O)-, -(O)C-NH-, -(CH₃)N-C(O)-, -(O)C-N(CH₃)-, -S(O₂)-O-, -O-S(O₂)-, -S(O₂)-NH-, -NH-S(O₂)-, -S (O₂) -N (CH₃) -, -N(CH₃) -S(O₂) -, comprenant 2 à 30 atomes de carbone, un radical hydrocarboné aliphatique ou cycloaliphatique, linéaire ou ramifié, contenant le cas échéant des doubles liaisons, fonctionnalisé en position terminale par OH, OR', NH₂, N(H)R', N(R')₂ (avec R' représentant un radical C₁-C₃₀-alkyle contenant le cas échéant des doubles liaisons), comprenant 1 à 30 atomes de carbone ou un polyéther à structure à blocs ou statistique formé à partir de -(R⁵-O)ₙ-R⁶,
où
R⁵ représente un radical hydrocarboné linéaire ou ramifié, comprenant 2 à 4 atomes de carbone,
n vaut 1 à 100, de préférence 2 à 60, et
R⁶ représente hydrogène, un radical hydrocarboné aliphatique linéaire ou ramifié, contenant le cas échéant des doubles liaisons, comprenant 1 à 30 atomes de carbone, un radical hydrocarboné cycloaliphatique contenant le cas échéant des doubles liaisons, comprenant 5 à 40 atomes de carbone, un radical hydrocarboné aromatique comprenant 6 à 40 atomes de carbone, un radical alkylaryle comprenant 7 à 40 atomes de carbone ou un radical -C(O)-R⁷ avec
R⁷ représentant un radical hydrocarboné aliphatique linéaire ou ramifié, contenant le cas échéant des doubles liaisons, comprenant 1 à 30 atomes de carbone, un radical hydrocarboné cycloaliphatique contenant le cas échéant des doubles liaisons, comprenant 5 à 40 atomes de carbone, un radical hydrocarboné aromatique comprenant 6 à 40 atomes de carbone, un radical alkylaryle comprenant 7 à 40 atomes de carbone.

3. Revêtement épais pour le sol selon la revendication 1, **caractérisé en ce que** les liquides ioniques sont constitués par au moins un cation des formules générales (V), (VI), (VII) 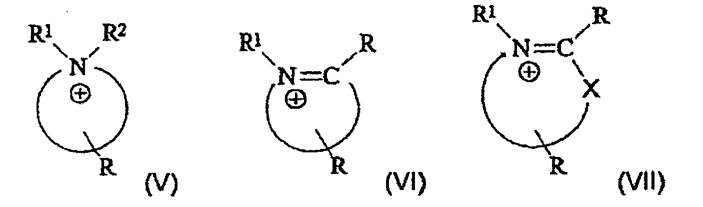
R représente hydrogène, un radical hydrocarboné aliphatique linéaire ou ramifié, contenant le cas échéant des doubles liaisons, comprenant 1 à 30 atomes de carbone, un radical hydrocarboné cycloaliphatique contenant le cas échéant des doubles liaisons, comprenant 5 à 40 atomes de carbone, un radical hydrocarboné aromatique comprenant 6 à 40 atomes de carbone ou un radical alkylaryle comprenant 7 à 40 atomes de carbone et
R¹ et R² ont la signification susmentionnée, et
X peut représenter un atome d'oxygène, un atome de soufre ou un atome d'azote substitué (X = 0, S, NR¹).

4. Revêtement épais pour le sol selon la revendication 1, **caractérisé en ce que** les liquides ioniques sont constitués par au moins un cation de formule générale (VIII) 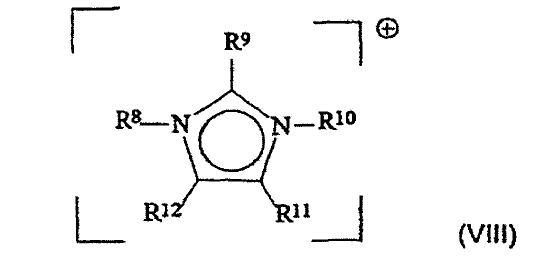 dans laquelle
R⁸, R⁹, R¹⁰, R¹¹, R¹² sont identiques ou différents et signifient hydrogène, un radical hydrocarboné aliphatique linéaire ou ramifié, contenant le cas échéant des doubles liaisons, comprenant 1 à 30 atomes de carbone, un radical hydrocarboné cycloaliphatique contenant le cas échéant des doubles liaisons, comprenant 5 à 40 atomes de carbone, un radical hydrocarboné aromatique comprenant 6 à 40 atomes de carbone, un radical alkylaryle comprenant 7 à 40 atomes de carbone, un radical hydrocarboné aliphatique linéaire ou ramifié, contenant le cas échéant des doubles liaisons, interrompu par un ou plusieurs hétéroatomes (O, NH, NR' avec R' représentant un radical C₁-C₃₀-alkyle contenant le cas échéant des doubles liaisons) comprenant 1 à 30 atomes de carbone, un radical hydrocarboné aliphatique linéaire ou ramifié, contenant le cas échéant des doubles liaisons, interrompu par une ou plusieurs fonctionnalités, choisies dans le groupe -O-C(O)-, -(O)C-O-, -NH-C (O) -, - (O) C-NH-, -(CH₃)N-C(O)-, - (O) C-N (CH₃) -, -S(O₂)-O- , -O-S (O₂)-, -S(O2)-NH-, -NH-S (O₂) -, -S (O₂) -N (CH₃) -, -N(CH₃)-S(O₂)-, comprenant 1 à 30 atomes de carbone, un radical hydrocarboné aliphatique ou cycloaliphatique, linéaire ou ramifié, contenant le cas échéant des doubles liaisons, fonctionnalisé en position terminale par OH, OR', NH₂, N(H)R', N(R')₂ avec R' représentant un radical C₁-C₃₀-alkyle contenant le cas échéant des doubles liaisons, comprenant 1 à 30 atomes de carbone ou un polyéther à structure à blocs ou statistique formé à partir de -(R⁵-O)ₙ-R⁶,
où
R⁵ représente un radical hydrocarboné comprenant 2 à 4 atomes de carbone,
n vaut 1 à 100 et
R⁶ représente hydrogène, un radical hydrocarboné aliphatique linéaire ou ramifié, contenant le cas échéant des doubles liaisons, comprenant 1 à 30 atomes de carbone, un radical hydrocarboné cycloaliphatique contenant le cas échéant des doubles liaisons, comprenant 5 à 40 atomes de carbone, un radical hydrocarboné aromatique comprenant 6 à 40 atomes de carbone, un radical alkylaryle comprenant 7 à 40 atomes de carbone ou un radical -C(O)-R⁷ avec
R⁷ représentant un radical hydrocarboné aliphatique linéaire ou ramifié, contenant le cas échéant des doubles liaisons, comprenant 1 à 30 atomes de carbone, un radical hydrocarboné cycloaliphatique contenant le cas échéant des doubles liaisons, comprenant 5 à 40 atomes de carbone, un radical hydrocarboné aromatique comprenant 6 à 40 atomes de carbone ou un radical alkylaryle comprenant 7 à 40 atomes de carbone.

5. Revêtement épais pour le sol selon l'une quelconque des revendications 1 à 4, **caractérisé en ce que** les liquides ioniques contiennent au moins un anion, choisi dans le groupe formé par les halogénures, les bis(perfluoroalkylsulfonyl)amides ou les bis(perfluoroalkylsulfonyl)imides, le bis(trifluorométhylsulfonyl)imide, les alkyltosylates et les aryltosylates, les perfluoroalkyltosylates, le nitrate, le sulfate, l'hydrogénosulfate, les alkylsulfates et les arylsulfates, les polyéthersulfates et les polyéthersulfonates, les perfluoroalkylsulfates, le sulfonate, les alkylsulfonates et les arylsulfonates, les alkylsulfonates et les arylsulfonates perfluorés, les alkylcarboxylates et les arylcarboxylates, les perfluoroalkylcarboxylates, le perchlorate, le tétrachloroaluminate, le saccharinate, les anions des composés dicyanamide, thiocyanate, isothiocyanate, le tétraphénylborate, le tétrakis(pentafluorophényl)borate, le tétrafluoroborate, l'hexafluorophosphate, les polyétherphosphates et les phosphates.

6. Revêtement épais pour le sol selon l'une quelconque des revendications 1 à 5, **caractérisé en ce que** les liquides ioniques contiennent au moins un cation choisi dans le groupe formé par les cations 1,3-dialkylimidazolium, 1,2,3-trialkylimidazolium, 1,3-dialkylimidazolinium et 1,2,3-trialkylimidazolinium et au moins un anion, choisi dans le groupe formé par les halogénures, le bis(trifluorométhylsulfonyl)imide, les perfluoroalkyltosylates, les alkylsulfates et alkylsulfonates, les alkylsulfonates et alkylsulfates perfluorés, les perfluoroalkylcarboxylates, le perchlorate, le dicyanamide, le thiocyanate, l'isothiocyanate, le tétraphénylborate, le tétrakis(pentafluorophényl)borate, le tétrafluoroborate, l'hexafluorophosphate, les sels d'ammonium quaternaire, acycliques.

7. Revêtement épais pour le sol selon l'une quelconque des revendications 1 à 6, **caractérisé en ce que** les liquides ioniques contiennent au moins un additif sous forme d'un composé qui améliore la solubilité du cation ou sous forme d'un complexant, en particulier un éther-couronne ou ses cryptans et/ou l'EDTA.

8. Revêtement épais pour le sol selon l'une quelconque des revendications 1 à 7, **caractérisé en ce qu'**au moins un sel est dissous dans les liquides ioniques, qui est choisi dans le groupe formé par les sels de métal alcalin des anions bis(perfluoroalkylsulfonyl)amide ou bis(perfluoroalkylsulfonyl)imide, par exemple le bis(trifluorométhylsulfonyl)imide, les alkyltosylates et les aryltosylates, les perfluoroalkyltosylates, le nitrate, le sulfate, l'hydrogénosulfate, les alkylsulfates et les arylsulfates, les polyéthersulfates et les polyéthersulfonates, les perfluoroalkylsulfates, le sulfonate, les alkylsulfonates et le arylsulfonate, les alkylsulfonates et les arylsulfonates perfluorés, les alkylcarboxylates et les arylcarboxylates, les perfluoroalkylcarboxylates, les perchlorates, le tétrachloroaluminate, le saccharinate, de préférence des anions des composés thiocyanate, isothiocyanate, dicyanamide, le tétraphénylborate, le tétrakis(pentafluorophényl)borate, le tétrafluoroborate, l'hexafluorophosphate, le phosphate et les polyétherphosphates.

9. Revêtement épais pour le sol selon l'une quelconque des revendications 1 à 8, **caractérisé en ce que** la matrice du revêtement est constituée par au moins un polyuréthane, une résine époxyde, une résine polyester, un acrylate, un méthacrylate ou un ester de vinyle.

10. Revêtement épais pour le sol selon l'une quelconque des revendications 1 à 9, **caractérisé en ce que** la matrice du revêtement contient des charges et/ou des pigments, de préférence avec des propriétés conductrices, tel(le)s que par exemple des fibres de carbone, le graphite, la suie, les oxydes métalliques (alliés) et/ou des charges et/ou des pigments revêtu(e)s par ceux-ci.

11. Revêtement épais pour le sol selon l'une quelconque des revendications 1 à 10, **caractérisé en ce qu'**il contient les composants antistatiques en des quantités entre 0,01 et 30% en poids et de préférence entre 0,1 et 20% en poids.

12. Revêtement épais pour le sol selon l'une quelconque des revendications 1 à 11, **caractérisé en ce qu'**il présente une épaisseur de couche jusqu'à 2,0 cm, de préférence jusqu'à 1,0 cm, de manière particulièrement préférée jusqu'à 6 mm et en particulier entre 2 et 4 mm.

13. Utilisation du revêtement épais pour le sol selon l'une quelconque des revendications 1 à 12 dans le domaine chimique de la construction et en particulier pour des halls de montage et des bâtiments professionnels de l'industrie électronique et électrotechnique ainsi que des bâtiments et des domaines d'utilisation qui sont soumis à des risques par des charges électrostatiques.
